# EUROPEAN PATENT APPLICATION

(11) **EP 1 927 749 A2**
(43) Date of publication of application: **04.06.2008**
(21) Application number: 07119259.5
(22) Date of filing: 25.10.2007
(51) Int. Cl.: F03G 6/00

(54) **ORC system utilizing solar energy in a power plant and solar collector arrangement**

(30) Priority: 28.11.2006 HU 0600260 U; 28.11.2006 HU 0600261 U
(71) Applicant: Kiss, Tibor, Fö u. 63 2096 Üröm (HU)
(72) Inventor: Kiss, Tibor, Fö u. 63 2096 Üröm (HU)
(74) Representative: Szuhai, Elemér

(57) **Abstract**

The invention is an ORC system utilizing solar energy in a power generating plant, comprising of solar collector (1), steam-engine with heat exchanging condenser (3), storage tank (4) for working fluid and pump (5) for delivery working fluid to the solar collector, wherein at least one heat-proof and pressure-tight solar collector (1) furnishing the boiler function of the ORC system in working has a liquid area and a vapor area in it, and said solar collector (1) is equipped with a leveling valve (8) on its inlet for ORC working fluid pumped by pump (5) from storage tank (4) to an upper tank (7) on which upper tank (7) the inlet of the leveling valve (8) is connected.

The invention is further a solar collector arrangement for ORC system comprising at least one solar collector (1) comprising a pipe-work in a thermal isolated space covered by sheet-glass framed in a framework, wherein two parallel sheets of hardened glass are framed in a two-walled framework which has an air-hole (9) between its two walls.

## Description

### Field of the invention:

The invention relates to an ORC system utilizing solar energy in a power generating plant, comprising of solar collector, heat exchanging condenser, storage tank for working fluid and pump for delivery working fluid to the solar collector. The invention relates further to the construction of a suitable solar collector arrangement.

### Background:

Systems and methodology for converting solar energy to electrical energy, and thermal energy for converting the resultant thermal energy to electrical energy are disclosed. Systems and methodology for conversion of low temperature thermal energy, wherever obtained, to electrical energy in a Ranking cycle mechanism driving an electrical generator, or to do other work in cost effective way are also disclosed.

In an Organic Ranking Cycle (ORC) the high pressure working liquid (organic working fluid) enters a boiler where it is heated (to about 200 °C) at a constant pressure (15-20 bar) by an external heat source to become superheated vapor. The superheated vapor expands through a steam-turbine to generate power output. The vapor then enters a condenser where it is cooled to become liquid. This liquid pumped to high pressure then reenters the boiler and the cycle repeats. The organic working fluid has to be able to work in a temperature range of -50 °C to +350 °C. The common (external) heat sources for power plant systems are coal, natural gas, or nuclear power.

Improved organic working fluids for ORC plants are disclosed in the US patent application 20060196187 A1. The working fluid comprises heavy iso-paraffin hydrocarbons at least as major component in the working fluid.

Even an ORC turbo-generator (up to about 800 kWel) consisting of a single skid mounted assembly containing all the equipment required for the turbo-generator to be operated (heat exchangers, piping, working fluid feed up pump, turbine, electric generator, control and switch-gear) can be obtained from the company Turboladen s.r.l. (Italy).

The external energy used for heating the ORC system can be e.g. waste heat from gas turbines, waste heat from other industrial processes, heat produced by the combustion of conventional fuels, heat produced by combustion of biomass fuel, geothermal resources, solar energy, etc.

It is characteristic for the known solutions that the ORC system has a steam-generator heat exchanger (boiler) for the organic ORC working fluid heated by an external heat source which is separated from the closed loop of the ORC working fluid. Examples for the applied connection between solar collector as external heat source and internal heat exchanger for working fluid of the ORC system are disclosed in the above US 20060196187A1 and the US 2006019687A1 patent descriptions.

According to the US 2006019687A1 there is a solar electric generator applied as source of energy, in which coolant liquid is circulated to cool the solar cells. The closed loop of the coolant liquid passes through the primer canal of the vapor generator heat exchanger (boiler). The solar collector in this arrangement have to meet relative low heat-proof quality and pressure-tightness requirements.

In this equipment the heat source function of the coolant liquid and of the solar cells can not be harmonized for an optimal recovery of energy. In both example there is a need for a liquid loop between the solar collector and the vapor generator. Therefor the structure of the power plant is complicated and the efficiency is lower than optimal.

### Summary of the invention:

An aspect of the present invention is to improve the efficiency and to simplify the structure of the power plant. A second aspect is to make it possible completing the power plant as a single mounted assembly.

The present invention overcomes the above mentioned insufficiencies of the known solutions and fulfills the above aims.

The solar collector according to the invention furnishes the boiler function in an ORC system, it is able to generate superheated vapor from liquid phase of organic working fluid directly from the solar energy. Therefor it is heat-proof, pressure-tight and thermal insulated solar collector.

According to the invention the solution fulfilling the above aims is an ORC system utilizing solar energy in a power generating plant, comprising of solar collector, steam-engine with heat exchanging condenser, storage tank for working fluid and pump for delivery working fluid to the solar collector, wherein at least one heat-proof and pressure-tight solar collector furnishing the boiler function of the ORC system in working has a liquid area and a vapor area in it, and said solar collector is equipped with a leveling valve on its inlet for ORC working fluid pumped by pump from storage tank to an upper tank, on which upper tank the inlet pipe of the leveling valve is connected as characterized in the main claim 1, further it is a heat-proof and pressure-tight solar collector arrangement for ORC system as characterized in main claim 3.

According to the invention the solar collector arrangement for ORC system comprises at least one solar collector comprising a pipe-work in a thermal isolated space covered by sheet-glass framed in a framework, wherein two parallel sheets of hardened glass are framed in a double-walled framework which has an air-hole between its two sheets of the double walls.

Preferably the solar collector is arranged in a fixed position facing of one or more, sunshine reflecting mirrors.

Preferably the solar collector is completed by controllable diffractive lamellas and/or diffractive cover.

### Brief description of the drawings:

- Figure 1: illustrates a power plant with ORC system according to the invention for utilizing solar energy.
- Figure 2: illustrates a solar collector in front view.
- Figure 3: A-A section of the solar collector according fig 2
- figure 4: B-B section of the solar collector according fig 2

### Detailed description:

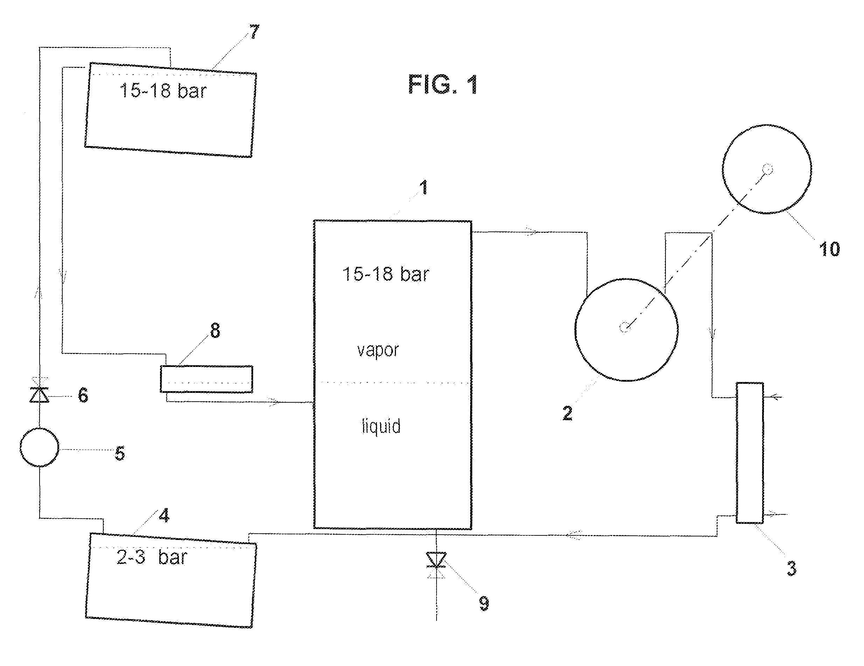

The solar collector 1 on the figs. 1-4 furnishes the boiler function in an ORC system, it is able to generate superheated vapor from liquid phase of an organic working fluid directly from the solar energy. Therefor it is a heat-proof, pressure-tight and thermal insulated solar collector.

To the outlet of the solar collector 1 of fig 1 an inlet pipe of an organic steam turbine 2 (or other steam-engine) is connected. An axle of the steam turbine 2 is mechanical connected to an electricity generator 10. On the outlet pipe of the turbine 2 a water cooled heat exchanging condenser 3 is arranged for cooling the exhaust steam to liquid phase. On the outlet pipe of the condensed working fluid there is a storage tank 4 arranged. From the storage tank 4 a pump 5 delivers the working fluid over a one way valve 6 to an upper (buffer) tank 7. The upper tank 7 is connected to the solar collector 1, only a leveling valve 8 for control the liquid level in the solar collector 1 is interposed in this connection. The solar collector has a pressure-reducing safety valve 9 as well.

The above units of the ORC system build a closed loop for the working fluid. As working fluid there is applied a mix of heavy iso-paraffin hydrocarbons, which fluid is applicable in a temperature range between -50 °C and +350 °C. Such working fluids are disclosed among others in the US 20060196187A1 document.

Instead of a steam-turbine 2 other steam-engines (slow engines) can be applied, such as a reciprocating expansion-engine, or a modified scroll-compressor or worm-compressor installed as motor for converting the energy of expanding steam to rotary motion.

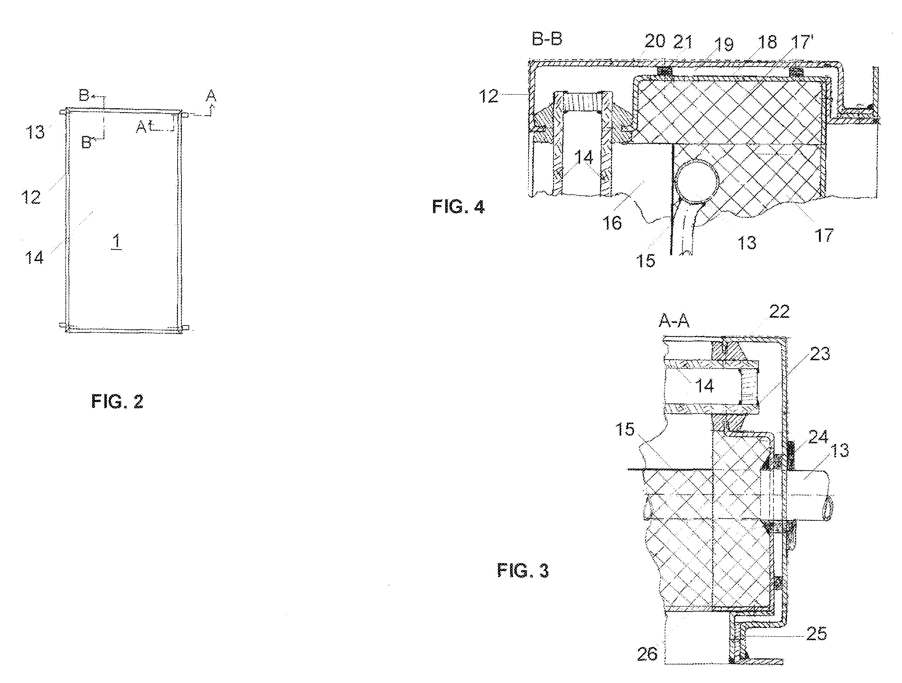

The solar collector 1 (figs. 2-4) comprises a pipe-work 13 in a thermal isolated space 16 covered by sheet-glass 14 framed in a framework 12. Two parallel sheets of hardened sheet-glass 14 are framed in a double-walled framework 12, which framework has an air-hole 19 and spacers 21 of termo-isolating material between its inner and outer walls 18, 20 of the double walls. The pipe-work 13 has a wing-plate 15 for each prong, arranged parallel to the sheet-glasses 14 and brazed to the pipes for collecting and to conduit the heat energy to the pipe-work. The space 16 is thermal isolated by termo-isolating material 17, 17' arranged around and at the back of the wing-plates 15, binnen the inner wall 18 of the double walled frame-work 12 and a beck-panel 26 of the solar collector 1. In and outgoing pipe-ends are isolated by bushing seal 24 in the openings of the inner wall 18.

Both sheets of hardened glass 14 are framed in the front opening of the 12 frame-work between the outer and inner walls 18, 20 by termo-isolating band-seals 22, 23. The two sheets of hardened glass 14 are welded together, between both sheets there is a closed hole of about 10 mm width.

Preferably the solar collector 1 has a supporting frame 25 and is arranged in a fixed (facing to northern) position facing of one or more, sunshine reflecting mirrors (not depicted).

Preferably the solar collector 1 is completed by controllable diffractive lamellas and/or diffractive cover (not depicted) for controlling the collected solar energy during the day and for preventing overdose of collected energy by very intensive sunshine.

Working of the ORC system utilizing solar energy in a power generating plant in view of figs. 1-4 can be interpreted as follows:
The volume of the pipe-work 13 of the solar collector 1 is not fully filled with liquid working fluid, it has a lower part of volume for the liquid (liquid area) and a higher part of volume (vapor area) for vapor phase of the working fluid. The level of the working liquid is continuously stabilized by the leveling valve 8 which is connected to a level-sensor. The pump 5 creates a pressure of about 15 - 20 bar in the upper tank 7 and in the solar collector 1. Collected energy of the sunshine overheats and vaporises a part of the working fluid, so that overheated steam gets to the turbine 2, where it expands converting the heat energy to mechanical energy. The exhaust steam from turbine 2 gets in the water cooled condenser 3, where it will be converted in liquid phase. This liquid will be collected in the storage tank 4, by only 2-3 bar pressure. The low pressure (2-4 bar) section of the closed lupe of the working fluid is separated by the one way valve 6 from the high pressure (15 - 18 bar) section of the closed lupe. Applying the upper (buffer) tank 7 provides the possibility of the periodic work instead of continuous work of the pump 5.

The above description and example have been provided for purpose of illustration and are not meant to limit the invention in any way. As will be apparent to a skilled person, the invention can be carried out in using different compounds, all without exceeding the scope of the invention.

## Claims

1. ORC system utilizing solar energy in a power generating plant, comprising of solar collector (1), steam-engine with heat exchanging condenser (3), storage tank (4) for working fluid and pump (5) for delivery working fluid to the solar collector, **characterized in that** at least one heat-proof and pressure-tight solar collector (1) furnishing the boiler function of the ORC system in working has a liquid area and a vapor area in it, and said solar collector (1) is equipped with a leveling valve (8) on its inlet for ORC working fluid pumped by pump (5) from storage tank (4) to an upper tank (7) on which upper tank (7) the inlet of the leveling valve (8) is connected.

2. ORC system utilizing solar energy according to claim 1, **characterized in that** the solar collector (1) is arranged in fixed position facing of one or more, sunshine reflecting mirrors.

3. Solar collector arrangement for ORC system according to claim 1 or 2 comprising at least one solar collector (1) comprising a pipe-work (13) in a thermal isolated space (16) covered by sheet-glass framed in a framework, **characterized in that** two parallel sheets of hardened glass (14) are framed in a double-walled frame-work (12) which has an air-hole (19) between its inner and outer walls (18, 20).

4. Solar collector arrangement according to claim 3, **characterized in that** the solar collector (1) is arranged in a fixed position facing of one or more, sunshine reflecting mirrors.

5. Solar collector arrangement according claim 3 or 4, **characterized in that** the solar collector (1) is completed by controllable diffractive lamellas and/or diffractive cover.
